Europäisches Patentamt

European Patent Office

Office européen des brevets

(19)

(11) Veröffentlichungsnummer: **0 051 683**
**B1**

(12) **EUROPÄISCHE PATENTSCHRIFT**

(45) Veröffentlichungstag der Patentschrift: **28.12.83**

(51) Int. Cl.³: **B 01 D 25/12**

(21) Anmeldenummer: **80105397.6**

(22) Anmeldetag: **10.09.80**

(54) Filterplatte für eine Filterpresse.

(30) Priorität: **10.09.79 HU JU000299**

(43) Veröffentlichungstag der Anmeldung:
**19.05.82 Patentblatt 82/20**

(45) Bekanntmachung des Hinweises auf die Patenterteilung:
**28.12.83 Patentblatt 83/52**

(84) Benannte Vertragsstaaten:
**AT BE CH DE FR GB IT LI LU NL SE**

(56) Entgegenhaltungen:
**DE - A - 2 303 482**
**DE - A - 2 460 411**

(73) Patentinhaber: **CHEMOKOMPLEX Vegyipari Gépés Berendezés Export-Import Vállalat
Népköztársaság utja 60
Budapest (HU)**

(72) Erfinder: **Juhasz, Adam, Dr.-Ing.
Vöröshadsereg utja 99
Budapest (HU)**

(74) Vertreter: **Patentanwälte Viering & Jentschura
Steinsdorfstrasse 6
D-8000 München 22 (DE)**

Courier Press, Leamington Spa, England.

Filterplatte für eine Filterpresse

Die Erfindung betrifft eine Filterplatte für eine Filterpresse, insbesondere eine aus elastischem Kunststoff bestehende Filterplatte, mit zwei zu beiden Seiten eines Spaltes, in den ein Druckmitteleinlaß mündet, angeordneten elastischen Wänden und einem aus deren Material bestehenden Randflansch, in den die Wände einstückig übergehen, die an ihren Außenseiten mit mit einem Filtertuch zusammenwirkenden, Filtrat ableitende Kanäle bildenden Abstandshaltern versehen sind und unter dem Druck des Druckmittels elastisch auseinanderdrückbar sind (DE - A - 2 303 482).

Derartige Filterplatten werden in der Filterpresse aneinandergestapelt. In den Raum zwischen den Filtertüchern einander benachbarter Filterplatten wird ein Gemisch aus einer Flüssigkeit und einem Feststoff eingebracht, so daß die Flüssigkeit durch die Filtertücher hindurch abfließen kann. Durch Einführung eines Druckmittels in den Spalt zwischen den elastischen Wänden der Filterplatten werden die elastischen Wände auseinandergedrückt, so daß das zu trennende Gemisch zwischen den Filtertüchern zusammengepreßt wird und die Preßflüssigkeit durch die Filtertücher in die zwischen den Abstandshaltern auf der Außenseite der elastischen Wände ausgebildeten Kanäle gelangt und aus diesen abgeleitet wird. Während des Betriebes einer derartigen Filterpresse bilden sich daher swischen den Filtertüchern der benachbarten Filterplatten sogenannte Filterkuchen. Nach dem Filtriervorgang werden die Filterplatten voneinander entfernt, infolgedessen die Filterkuchen, ggf. durch erneutes Zuführen von Druckmittel zwischen die elastischen Wände der Filterplatte understützt, aus dem Raum zwischen den Filtertüchern herausfallen oder aus diesen herausgenommen werden können.

Bei einer bekannten Filterplatte sind die den Spalt begrenzenden Wände aus Festigkeitsgründen steif und sind an den Randflansch mit Hilfe von flexiblen, also relativ dünnen Gürteln angeschlossen, damit die Verschiebung der Wände parallel zu sich selbst ermöglicht wird. Eine solche Filterpresse ist z.B. in der DE - A - 23 58 578 erläutert.

Diese bekannte Ausführungsform ist aber nur geeignet, die Filterkuchen nach dem Filtriervorgang durch die Bewegung der steifen Wände aus dem Raum zwischen den Filtertüchern auszuwerfen. Sie ist hingegen nicht dazu geeignet, die Restflüssigkeit der Filterkuchen in herkömmlicher Weise auszupressen, weil dies durch die geringe Festigkeit der die steifen Wände mit dem Flansch verbindenden flexiblen Gürtel nicht zugelassen ist. Zum Nachpressen ist nämlich ein Druck von 14 bis 50 kg/cm² (13,7 bis 49 bar) notwendig, im Gegensatz zu dem Auswerfen des Filterkuchens, wo nur ein Druck von 0,01 bis 0,1 kg/cm² (0,01 bis 0,1 bar) aufgebracht werden muß. Der Preßdruck übertrifft also um Größenordnungen den zum Auswerfen des Filterkuchens notwendigen Druck. Dementsprechend würden die die steifen Wände mit dem Randflansch der Filterplatte verbindenden dünnen Gürtel unter Einwirkung der zum Nachpressen der Filterkuchen notwendigen großen Drücke auswulsten und würden sofort oder relativ schnell zerstört werden oder durchreißen. Die lokale Verringerung der Wandstärke bringt auch fertigungstechnische Schwierigkeiten mit sich, weil es die Anwendung sehr komplizierter Formen und Technologien notwendig macht.

Es sind jedoch auch Filterplatten bekannt, bei denen die den Spalt begrenzenden Wände elastisch und verhältnismäßig dick sind, so daß auch ein Nachpressen des Filterkuchens erfolgen kann. Um hierbei an den Übergängen von den elastischen Wänden in den Randflansch an dem Umfang des Spaltes Kerbspannungen durch des Auseinanderdrücken der Wände zu vermeiden, wie sie bei bekannten Filterplatten mit bloßen Ausrundungen der Spaltränder (DE - B - 24 60 411) immer noch auftreten können, sind nach dem anderen bekannten Vorschlag (DE - A - 23 03 482) in den Spalt zwischen die elastischen Wände Trennlagen aus Duroplast-, Zellglas- oder Papierfolien eingesetzt, die entlang des Umfangs des zwischen ihnen ausgebildeten Spaltes durch eingesetzte Rundprofilstäbe aus einem Vollmaterial begrenzt sind. Außerdem sind zur Steigerung der Beweglichkeit der elastischen Wände und Beseitigung von Biegespannungen im Bereich des Überganges der Wände in den Randflansch diese an ihrer Außenseite mit einer sie rings umlaufenden halbkreisförmigen Nut versehen.

Durch die Erfindung wird die Aufgabe gelöst, eine Filterplatte mit den eingangs erwähnten Merkmalen so auszubilden, daß die elastischen Wände auch im Bereich des Umfangs des Spaltes unter dem Druck des in den Spalt eingeführten Druckmittels für das Nachpressen des Filterkuchens auseinandergerückt werden, ohne daß dadurch die Gefahr der Beschädigung der Filterplatte aufgrund der zum Nachpressen eingesetzten hohen Drücke im Bereich der Stelle des einstückigen Übergangs der Wände in den Randflansch besteht oder ihre Betriebssicherheit nachteilig beeinflußt wird.

Dies wird erfindungsgemäß dadurch erreicht, daß der Spalt an seinem Umfang in zwei auswärtsgerichtete, zum Randflansch bin verlaufende Randspalte verzweigt ist, entlang denen die Wände mit gleichbleibender Wandstärke in den Randflansch übergehen.

Da die industriellen Filterplatten der vorliegenden Art einen Durchmesser von 80 bis 200 cm haben, dagegen die Verschiebung ihrer elastischen Wände parallel zu sich selbst unter dem zum Nachpressen notwendigen Betriebsdruck lediglich 1 bis 2 cm beträgt, kann aufgrund der erfindungsgemäßen Gestaltung der Filterplatte eine Verschiebung dieser Größenordnung mit dicken, also die notwendige Festigkeit aufweisenden und zugleich elastischen Wänden infolge der elastischen Verformung ohne schädliche Nachwirkungen verwirklicht werden.

Durch die Erfindung sind die elastischen Wände der Filterplatten einschließlich ihres Übergangs in den Randflansch mit einer nahezu einheitlichen Festigkeit ausgestattet. Sie gehen erfindungsgemäß mit einer ungeschwächten, gleichbleibenden Wandstärke in den Randflansch über. Darüberhinaus ist durch die Verzweigung des Spaltes zwischen den elastischen Wänden in zwei auswärtsgerichtete, zum Randflansch hin varlaufende Randsplate die Gelenkigkeit der Wand-Flansch-Verbindungen wesentlich verbessert.

Es ist zweckmäßig, wenn die auswärtsgerichteten, gabelförmig verzweigten Randspalte bis in den Randflansch hineinreichen, weil die sich aus der Gelenkbewegung ergebende Beanspruchung an dieser Stelle am größten ist.

Bei der erfindungsgemäßen Filterplatte kann der Randflansch parallel zur Plattenebene derart geteilt sein, daß zwei an ihren Flanschteilen aneinander befestigte Plattenteile entstehen, von denen jeder mit einem der Randspalte und einer der Wände versehen ist. Die Flanschteile sind hierbei z.B. durch Vulkanisieren aneinanderbefestigt. Durch diese Ausführungsform ist eine ganz einfache Fertigungstechnologie ermöglicht.

Diese Ausführungsform hat besonders bei hohen Drücken des Filtriergemisches eine große Bedeutung, wenn zwischen die beiden Plattenteile eine Versteifungsplatte eingebaut werden soll, wodurch die Betribssicherheit der Filterplatte erhöht werden kann. Von der Versteifungsplatte wird dabei der Spalt in zwei Teilspalte unterteilt, die über eine Durchlaßöffnung in der Versteifungsplatte miteinander in Verbindung stehen, damit das zugeführte Druckmittel beiderseits der Versteifungsplatte wirksam werden kann.

Während des Filtriervorganges können die den Spalt begrenzenden Wände der Filterplatte aufeinander aufliegen, wordurch die Festigkeit der Filterplatte gegen die unter dem Druck des Filtriergemisches ausgeübten seitlichen Kräfte erhöht wird. Im unbelasteten Zustand hingegen kann zwischen den den Spalt begrenzenden Wänden der Filterplatte eine Fuge ausgebildet sein. Hierdurch läßbt sich der Filterkuchen automatisch auswerfen, weil die elastische Rückstellkraft der durch den Filterkuchen bei geschossener Presse unter Schließen der Fuge verformt gehaltenen Wand der Filterplatte, wenn die Presse geöffnet wird und daher die benachbarten Filterplatten voneinander entfernt werden, ausreichend ist, um den zwischen den Filterplatten entstandenen Filterkuchen auszuwefen.

Zwischen den Wänden kann eine spaltlose Zone ausgebildet sein, so daß hier z.B. ein das Filtriergemisch zuführender Durchlaß hindurchgeführt werden kann.

Die Erfindung wird ausführlicher anhand der Zeichnung erläutert, in welcher einige vorteilhafte Ausführungsformen der erfindungsgemäßen Filterplatte dargestellt sind. In der Zeichnung zeigt:

Fig. 1 den Längsschnitt einer Ausführungsform während des Filtriervorganges,

Fig. 2 die Ausführungsform gemäß Fig. 1 beim Nachpressen des Filterkuchens,

Fig. 3 den Längsschnitt einer anderen Ausführungsform während des Filtriervorganges,

Fig. 4 die Ausführungsform gemäß Fig. 3 beim Nachpressen des Filterkuchens, und

Fig. 5 den Längsschnitt einer weiteren Ausführungsform.

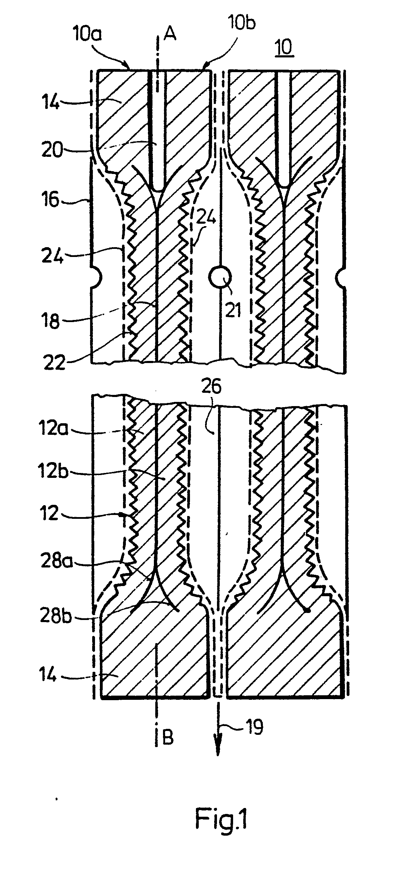

In Fig. 1 sind zwei aneinandergestellte Filterplatten gleicher Ausführung dargestellt, von denen die eine mit der Bezugszahl 10 bezeichnet ist. Die Filterplatte 10 besteht aus einer Stegplatte 12 und einem umlaufenden Randflansch 14. Die Stegplatte 12 ist entlang einer zu der Oberfläche 16 der Filterplatte 10 parallelen Trennebene A—B aufgeteilt, so daß die Stegplatte 12 aus zwei Wänden 12a bzw. 12b besteht, die zwischen einander einen entlang der Trennebene A—B liegenden Spalt 18 einschließen. Der Spalt 18 ist mit einem im Randflansch 14 ausgebildeten Einlaß 20 verbunden. Der Einlaß 20 kann an eine in der Zeichnung nicht dargestellte Druckmittelquelle angeschlossen werden.

Die Filterplatte 10 kann auch aus zwei Plattenteilen 10a und 10b zusammengestellt werden, die im Bereich des Randflansches 14 aneinander befestigt sind.

An den voneinander abgewendeten äußeren Oberflächen der Wände 12a, 12b sind in an sich bekannter Weise Abstandshalter 22, z.B. Rippen, angeordnet, auf denen ebenfalls in an sich bekannter Weise ein Filtertuch 24 aufliegt.

Die einander zugewendeten Filtertücher 24 der beiden jeweils benachbarten Filterplatten 10 umgeben jeweils einen Filtrierraum 26, der in an sich bekannter Weise mit einem Kanal 21 zum Zuführen der Trübe verbunden ist.

Wie in Fig. 1 dargestellt, geht der Spalt 18 in zwei auswärtsgerichtete, gabelförmig verzweigte Randspalte 28a, 28b über. Diese Randspalte 28a, 28b schließen miteinander einen spitzen Winkel ein und reichen zweckmäßigerweise, wie es auch in der Zeichnung dargestellt ist, in den Randflansch 14 hinein, was in seiner Bedeutung noch ausführlicher erläutert wird.

Die Arbeitsweise der in der Zeichnung dargestellten Filterplatte ist wie folgt:

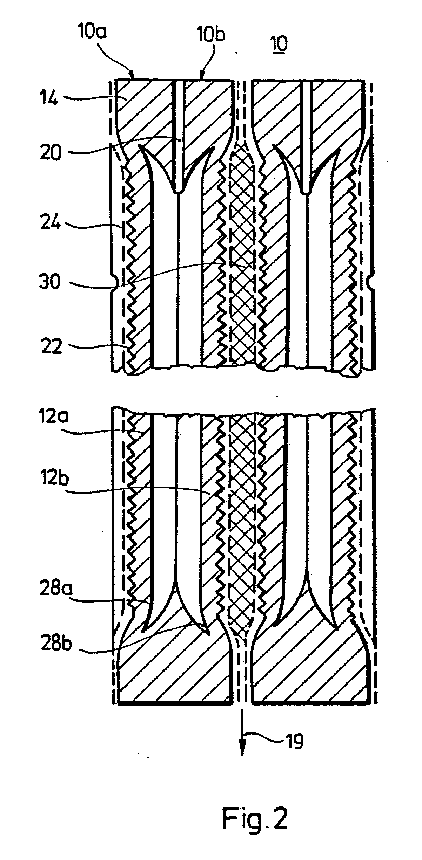

Die Filterplatten 10 werden zwischen die Backen einer Filterpresse mit horizontaler Achse eingespannt. Danach wird das Filtriergemisch, z.B. eine Trübe oder Suspension, über die Kanäle 21 in die Filtrierräume 26 unter Anwendung eines Überdruckes hineingeführt, wobei der flüssige Teil des Gemisches aus den filtratabführenden Kanälen zwischen der Stegplatte 12 und dem Filtertuch 24 in Richtung des Pfeiles 19 abgeführt wird. Wenn der Filtrierraum 26 mit den festen Bestandteilen der zugeführten Trübe oder Suspension praktisch angefüllt ist, wird über den Einlaß 20 in den Spalt 18 ein Druckmittel eingeführt. Dabei entfernen sich die den Spalt 18 begrenzenden beiden elastischen Wände 12a und 12b voneinander (Fig. 2) und üben einen Druck auf die Filterkuchen 30 in den Filtrierräumen 26 aus. Infolge dieses Nachpressens wird die restliche flüssige Komponente herausgepreßt und über die Filtertücher 24 in Richtung des Pfeiles 19 abgeleitet, so daß im Filtrierraum 26 ein Filterkuchen 30 mit einem relativ geringen Feuchtigkeitsgehalt zurückbleibt, der beim Öffnen der Filterpresse bzw. beim Entfernen der Filterplatten 10 voneinander herausfällt bzw. aus der Filterpresse entfernt werden kann.

Aus der Zeichnung ist es ersichtlich, daß die Wände des Spaltes 18 beim Nachpressen dank der Randspalte 28a, 28b relativ gleichmäßig voneinander weggerückt werden, d.h., daß sie praktisch entland ihrer ganzen Oberfläche parallel zu sich selbst verschoben werden. Während des Filtriervorganges liegen sie dagegen aufeinander auf, was mit dem Vorteil verbunden ist, daß die Steifigkeit der Stegplatte 12 dadurch größer wird.

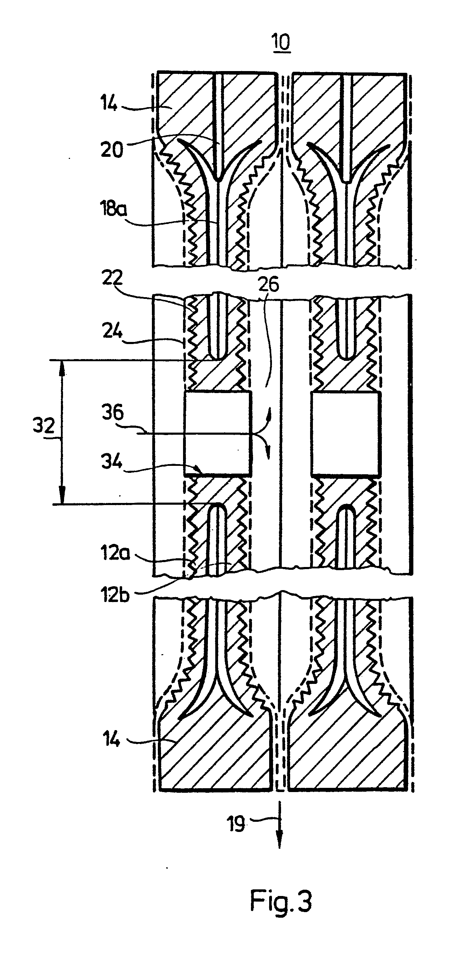

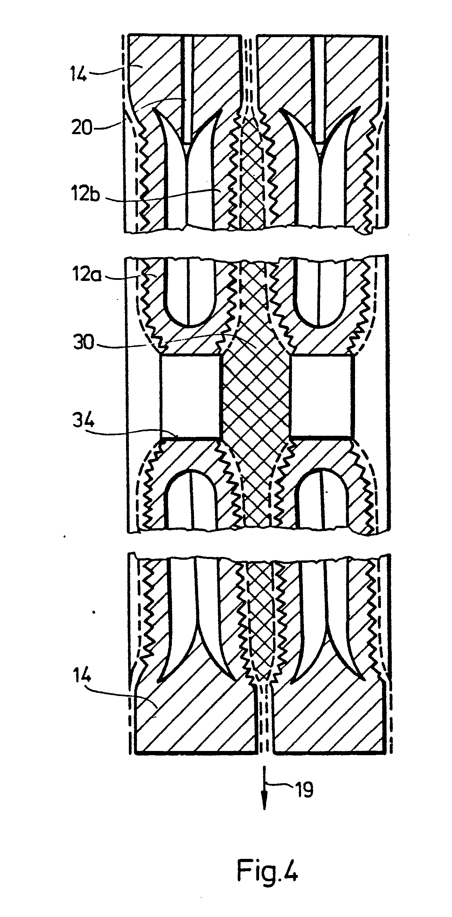

Die Ausführungsform gemäß Fig. 3 und 4 unterscheidet sich von der erläuterten Ausführungsform hinsichtlich zweier Merkmale.

Einerseits weist der Spalt 18 eine gewisse Weite in axialer Richtung auf, so daß die Begrenzungswände 12a und 12b des Spaltes 18 in unbelastetem Zustand durch eine Fuge 18a voneinander getrennt sind. Eine derartige Fuge 18a kann in solchen Fällen zweckmäßig sein, wenn die Filterkuchen 30 beim Öffnen der Filterpresse automatisch aus den Filtertüchern 24 heraus ausgeworfen werden sollen.

Ein anderer Unterschied besteht darin, daß in der Stegplatte 12 eine spaltlose Zone 32 ausgebildet ist, durch welche ein Durchlaß hindurchgeführt ist. Durch den Durchlaß 34 wird die Trübe oder Suspension, wie es in Fig. 3 durch Pfeile 36 dargestellt ist.

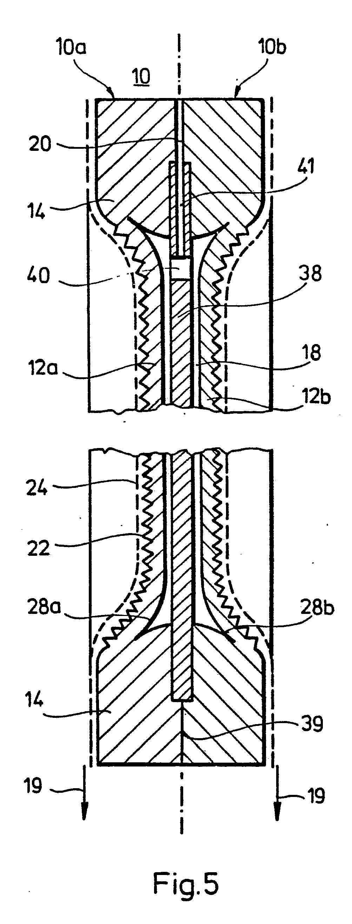

Fig. 5 zeigt eine Ausführungsform, bei welcher die Filterplatte 10 aus zwei selbständigen, entlang der Trennebene 39 miteinander verbundenen Plattenteilen 10a und 10b zusammengesetzt ist. Diese Plattenteile sind im Bereich des Flansches 14 zwecks Befestigung aneinander vulkanisiert. Statt der Vulkanisierung kann auch eine andere Befestigungsmethode, z.B. eine Schraubenbefestigung, angewendet werden. Im Spalt 18 ist bei der dargestellten Ausführungsform eine Versteifungsplatte 38 angeordnet, die die beiden Wände 12a und 12b voneinander trennt. In der Versteifungsplatte 38 ist eine das Druckmittel zuführende Öffnung 40 ausgebildet, die über einen Kanal 41 mit dem Einlaß 20 in Verbindung steht und die Teilspalte beiderseits der Versteifungsplatte 38 miteinander verbindet. Es können auch mehrere Öffnungen 40 ausgebildet werden.

Im unbelasteten Zustand können die elastischen Wände auf der Versteifungsplatte 38 aufliegen, wodurch sie zur Aufnahme von großen seitlichen Kräften abgestützt sind.

Die Filterplatte 10 kann in diesem Fall so hergestellt werden, daß zuerst die Plattenteile 10a und 10b unabhängig voneinander gefertigt werden. Dann wird in dem einen der Plattenteile die Versteifungsplatte 38 angeordnet. Danach wird der mit ver Versteifungsplatte 38 versehene Plattenteil mit dem anderen Plattenteil abgedeckt, und schließlich werden die beiden Plattenteile 10a, 10b im Bereich des Flansches zusammenvulkanisiert. Damit wird praktisch in einfacher Art und Weise eine einen einheitlichen Körper bildende Filterplatte 10 hergestellt, die nun lediglich mit Filtertüchern 24 versehen zu werden braucht.

Wenn die Filterkuchen 30 während des Filtriervorganges entwässert werden sollen, wird in den Spalt 18 über den Einlaß 20, den Kanal 41 und die Öffnung 40 ein Druckmittel eingeführt. Dabei entfernen sich die Wände 12a und 12b voneinander und üben einen Druck auf die zwischen den einander zugewendeten Filtertüchern 24 von zwei jeweils benachbarten Filterplatten 10 entstandenen Filterkuchen 30 aus. Die ausgepreßte Flüssigkeitsphase wird in Richtung der Pfeile 19 abgeführt. Auch im übrigen stimmt die Arbeitsweise dieser Filterplatte mit der der vorhergehend beschriebenen Ausführungsformen überein. Der einzige Unterschied besteht darin, daß nach dem Lösen des im Spalt 18 herschenden Druckes die Wände 12a und 12b gegen die seitlichen Kräfte auf der Versteifungsplatte 38 abgestützt werden können.

Es wurde schon darauf hingewiesen, daß die Wände 12a und 12b der Filterplatte 10 in unbelastetem Zustand, anstatt aufeinander aufzuleigen, auch eine Fuge zwischen einander bilden können. Wie es erläutert wurde, können beide dieser Lösungen begründet sein.

## Patentansprüche

1. Filterplatte für eine Filterpresse, mit zwei zu beiden Seiten eines Spaltes (18), in den ein Druckmitteleinlaß mündet, angeordneten elastischen Wänden (12a, 12b) und einem aus deren Material bestehenden Randflansch (14), in den die Wände einstückig übergehen, die an ihren Außenseiten mit mit einem Filtertuch (24) zusammenwirkenden, filtratableitende Kanäle bildenden Abstandshaltern (22) versehen sind und unter dem Druck des in den Spalt (18) eingeführten Druckmittels elastisch auseinanderdrückbar sind, dadurch, gekennzeichnet, daß der Spalt (18) an seinem Umfang in zwei auswärtsgerichtete, zum Randflansch (14) hin verlaufende Randspalte (28a, 28b) verzweigt ist, entlang denen die Wände (12a, 12b) mit gleichbleibender Wandstärke in den Randflansch (14) übergehen.

2. Filterplatte nach Anspruch 1, dadurch gekennzeichnet, daß der Randflansch (14) parallel zur Plattenebene derart geteilt ist, daß zwei an ihren Flanschteilen aneinander befestigte Plattenteile (10a, 10b) entstehen, von denen jeder mit einem der Randspalte (28a, 28b) und einer der Wände (12a, 12b) versehen ist.

3. Filterplatte nach Anspruch 2, dadurch gekennzeichnet, daß der Spalt (18) mittels einer zwischen die Wände (12a, 12b) eingesetzten Versteifungsplatte (38) in zwei Teilspalte unterteilt ist, die über eine Offnung (40) in der Versteifungsplatte (38) miteinander in Verbindung stehen.

4. Filterplatte nach einem der Ansprüche 1 bis 3, dadurch gekennzeichnet, daß zwischen den Wänden (12a, 12b) zum Durchführen eines Durchlasses (34) eine spaltlose Zone (32) ausgebildet ist.

**Revendications**

1. Plaque filtrante pour filtre-presse, comportant deux parois élastiques (12a, 12b) disposées de part et d'autre d'un interstice (18) dans lequel débouche une entrée (20) de fluide sous pression, ainsi qu'une bride périphérique (14) formée de la matière desdites parois et constituant une seule pièce avec ces dernières, ces parois étant pourvues, sur leurs côtés extérieurs, d'éléments d'écartement (22) coopérant avec une toile filtrante (24) et formant des canaux d'évacuation du filtrat, lesdites parois étant, en outre, susceptibles d'être écartées élastiquement l'une de l'autre par l'effet de la pression dudit fluide sous pression introduit dans l'interstice (18), caractérisée en ce que l'interstice (18) est bifurqué, à sa périphérie, pour former deux interstices périphériques (28a, 28b), dirigés vers l'extérieur, en direction de la bride périphérique (14), les parois (12a, 12b) présentant dans la zone de transition vers la bridge périphérique, une épaisseur constante.

2. Plaque filtrante selon la revendication 1, caractérisée en ce que la bride périphérique (14) est subdivisée parallélement au plan de la plaque de façon telle qu'il soit formé deux parties de plaque (10a, 10b) reliées entre elles à leurs parties de bride, chacune de ces parties de plaque étant pourvue d'un des interstices périphériques (28a, 28b) et d'une des parois (12a, 12b).

3. Plaque filtrante selon la revendication 2, caratérisée en ce que l'interstice (18) est subdivisé, par une plaque de renforcement (38) disposée entre lesdites parois (12a, 12b), en deux interstices partiels qui communiquent l'un avec l'autre par une ouverture (40) ménagée dans ladite plaque de renforcement (38).

4. Plaque filtrante selon une des revendications 1 à 3, caratérisée en ce qu'une zone (32) dépourvue d'interstice est formée entre les parois (12a, 12b) pour définir un passage (34).

**Claims**

1. Filter plate for a filter press, comprising two elastic walls (12a, 12b) arranged one on each side of a slit (18) into which an inlet (20) for pressure fluid opens, and a peripheral flange (14) consisting of the same material as the walls and with which the walls are continuous and integrally connected, which walls have spacer elements (22) on their external surfaces cooperating with a filter cloth (24) to form filtrate discharging channels, which walls may be pushed apart elastically under the pressure of the pressure fluid introduced into the slit (18), characterised in that the slit (18) branches at its periphery into two divergent slits (28a, 28b) extending towards the peripheral flange (14), the walls (12a, 12b) extending with uniform thickness along the said two divergent slits to merge with the peripheral flange (14).

2. Filter plate according to Claim 1, characterised in that the peripheral flange (14) is sub-divided parallel to the plane of the plate to form two plate parts (10a, 10b) attached together at their respective peripheral flanges, each of which plate part including one of the border slits (28a, 28b) and one of the walls (12a, 12b).

3. Filter plate according to Claim 2, characterised in that the slit (18) constitutes a chamber which is sub-divided into two subsidiary chambers by means of stiffening or reinforcing plate (38) inserted between the walls (12a, 12b), which subsidiary chambers communicate with each other through an opening (40) in the stiffening or reinforcing plate (38).

4. Filter plate according to one of the claims 1 to 3, characterized in that a slit-free zone (32) for the formation of a passage (34) is formed between the walls (12a, 12b).

Fig.1

Fig. 2

Fig. 3

Fig.4

Fig.5